# EUROPÄISCHE PATENTSCHRIFT

(11) **EP 4 038 442 B1**
(45) Veröffentlichungstag und Bekanntmachung des Hinweises auf die Patenterteilung: **06.11.2024**
(21) Anmeldenummer: 20776083.6
(22) Anmeldetag: 14.09.2020
(51) Int. Cl.: G02B 27/62

(54) **VORRICHTUNG ZUR MONTAGE SPHÄRISCHER OPTISCHER BAUTEILE**
DEVICE FOR MOUNTING SPHERICAL OPTICAL COMPONENTS
DISPOSITIF DE MONTAGE DE COMPOSANTS OPTIQUES SPHÉRIQUES

(30) Priorität: 30.09.2019 DE 102019006980
(43) Veröffentlichungstag der Anmeldung: 10.08.2022
(73) Patentinhaber: tooz technologies GmbH, 73430 Aalen (DE)
(72) Erfinder: PROCHNAU, Jens, 73447 Oberkochen (DE); PÜTZ, Jörg, 73431 Aalen (DE); SINGER, Wolfgang, 73431 Aalen (DE)
(74) Vertreter: Carlsohn, Marc René
(86) Internationale Anmeldenummer: PCT/EP2020/075664
(87) Internationale Veröffentlichungsnummer: WO 2021/063664

(56) Entgegenhaltungen:
- DE-A1- 102017 214 319
- JP-A- 2013 225 038
- RU-C1- 2 599 598
- US-A1- 2003 081 331

## Beschreibung

Die Erfindung betrifft eine Vorrichtung zur Justage und Montage zweier sphärischer optischer Bauteile.

Es ist bekannt, zu fügende optische Bauteile in allen drei Raumrichtungen unabhängig voneinander auszurichten. Beispielsweise wird bei der Herstellung einer Kittgruppe aus zwei Linsen ein Schmelzkitt auf eine der zu fügenden Flächen verteilt. Die zwei Linsen werden zusammengefügt und durch Bewegen der Linsen relativ zueinander werden eingeschlossene Luftblasen ausgedrückt. Anschließend werden die optischen Achsen der Linsen zueinander ausgerichtet. Die Dicke des Kittspalts zwischen den Linsenflächen ist jedoch nicht genau reproduzierbar. Ferner ist eine hochgenaue Positionierung der Linsen in Richtung des Verlaufs der optischen Achse sehr schwierig: eine seitliche Verschiebung kann durch die Krümmung der Flächen gleichzeitig eine Abstandsänderung zur Folge haben.

Aus der Schrift RU 2 599 598 C1 ist eine Vorrichtung zur Einstellung eines sphärischen Halters für ein optisches Element bekannt. Die Vorrichtung dient zur Einstellung des optischen Elements in einem optischen Resonator. Bei der Vorrichtung ist das optische Element in einem sphärischen, konvexen Halter gefasst. Der sphärische konvexe Halter liegt in einer sphärisch-konkaven Aufnahme. Der Halter wird mittels vier Justierschrauben, die am äußeren Rand zueinander um 90° versetzt angeordnet sind, mit der Aufnahme verbunden. Durch eine Einstellung der Justierschrauben kann der Halter in der Aufnahme auf den sphärischen Flächen bewegt und somit kann ein gewünschter Justierzustand eingestellt werden. Mittels eines nicht schrumpfenden Klebers, der in eine Ringnut der Aufnahme eingefügt wird, wird der eingestellte Justierzustand dauerhaft gesichert.

Die Erfindung soll das Problem lösen, eine Vorrichtung zur Montage sphärischer Bauteile zu liefern, um zwei sphärische optische Bauteile geometrisch genau und mit einem definierten Abstand zueinander zu justieren und um diese zu montieren. Der Abstand soll reproduzierbar und einstellbar sein.

Die Lösung der Aufgabe gelingt erfindungsgemäß mit den kennzeichnenden Merkmalen des Anspruchs 1. Die Unteransprüche sind vorteilhafte Ausgestaltungen der Vorrichtung des Anspruchs 1.

Die Vorrichtung zur Justage und Montage sphärischer optischer Bauteile umfasst eine erste Halterung, mit einer Aufnahme für ein erstes optisches Element mit einer ersten sphärischen konvexen Fläche mit einem Radius R1 und einer zweiten Halterung mit einer Aufnahme für ein zweites optisches Element mit einer zweiten sphärischen optischen konkaven Fläche mit einem Radius R2. Zumindest eine der Halterungen weist eine Lagerfläche mit einem Radius R3 auf und die erste Halterung ist auf der zweiten Halterung derart lagerbar, dass die Radien R1, R2, R3 einen gemeinsamen Mittelpunkt aufweisen, wenn das erste optische Element in die erste Halterung aufgenommen ist und das zweite optische Element in die zweite Halterung aufgenommen ist.

Die Radien R1, R2, R3 sind dabei so bemessen, dass zwischen der optischen Fläche des ersten Elements und der optischen Fläche des zweiten Elements ein Spalt einen definierten Abstand herstellt.

Dadurch, dass die sphärischen Flächen und die Lagerfläche(n) konzentrisch angeordnet sind, ist die Verschiebung um den gemeinsamen Mittelpunkt dieser Flächen gesperrt und es sind nur noch relative Verschiebungen der Elemente um diesen Mittelpunkt möglich.

Mit dieser Art der Lagerung sind die optischen Elemente bzw. deren optische Achsen zueinander positionierbar (im Rahmen der relativen Verstellbarkeit der Halterungen zueinander), ohne die Gefahr, dass eine derartige Positionierbewegung das durch die Radien R1, R2, R3 festgelegte Maß des Abstands der sphärischen Flächen der optischen Elemente negativ beeinflussen könnte. Die erfindungsgemäße Vorrichtung ermöglicht somit eine sehr viel einfachere und genauere Positionierung optischer Elemente zueinander als bisher nach dem Stand der Technik üblich.

Die Positionierung kann insbesondere zu dem Zweck erfolgen, um zwei optische Elemente zueinander auszurichten und anschließend zu einem Substratverbund zu verkleben.

Bevorzugt sind die Lagerflächen der Halterungen außerhalb eines zentrischen Bereichs der Halterungen, in dem die optischen Elemente platziert sind, angeordnet.

In einer ersten Ausführungsform ist die Lagerfläche in Form einer Kugelkalotte ausgebildet.

In einer zweiten Ausführungsform ist die Lagerfläche durch eine Dreipunkt-Auflage hergestellt.

Die Aufnahme der optischen Elemente in der Halterung kann durch ein erzeugtes Vakuum erfolgen.

Alternativ können die optischen Elemente durch eine Federklemmung mit der Halterung fixiert werden.

Gemäß der beanspruchten Erfindung ist der Abstand zwischen der optischen Fläche des ersten Elements und der optischen Fläche des zweiten Elements einstellbar.

In einer ersten Ausführung sind Justierschrauben in einer der Halterungen am Umfang, außerhalb des zentrischen Bereichs in denen das optische Element platziert ist, angeordnet und wirken auf die Lagerfläche der anderen Halterung ein.

In einer zweiten Ausführung sind die Justierschrauben in einer der Halterungen am Umfang innerhalb des zentrischen Bereichs, in denen das optische Element platziert ist, angeordnet und wirken auf das optische Element ein.

Zur Bestimmung eines definierten Abstands zwischen den optischen Elementen ist bevorzugt ein Messsystem vorgesehen, das zur Bestimmung einer Mittendicke und somit zur Bestimmung des Abstands zwischen den optischen Flächen der optischen Elemente eingerichtet ist. So ist der Füge- und Positionierprozess der optischen Elemente überprüfbar, steuerbar und gegebenenfalls regelbar.

Mit dem erfindungsgemäßen Aufbau ist es möglich, zwei optische Elemente in einem serienähnlichen Prozess zu positionieren und zu fügen. Mit Hilfe der erfindungsgemäßen Vorrichtung ist eine vorteilhafte sphärische Lagerung der Bauteile zueinander realisierbar, wobei eine sehr viel genauere und einfachere Montage der optischen Elemente erfolgen kann.

Die Erfindung wird nachfolgend an Hand von Figuren beschrieben. Es zeigen:
- Figur 1:: einen Aufbau einer erfindungsgemäßen Vorrichtung zur Montage sphärischer Bauteile,
- Figur 2:: einen weiteren Aufbau einer erfindungsgemäßen Vorrichtung zur Montage sphärischer Bauteile,
- Figur 3:: ein erstes Detail einer erfindungsgemäßen Vorrichtung (Federhalterung eines optischen Elements),
- Figur 4:: ein zweites Detail einer erfindungsgemäßen Vorrichtung (Justierschrauben, die auf ein optisches Element einwirken),
- Figur 5:: ein drittes Detail einer erfindungsgemäßen Vorrichtung (Justierschrauben, die an einer Halterung wirken).

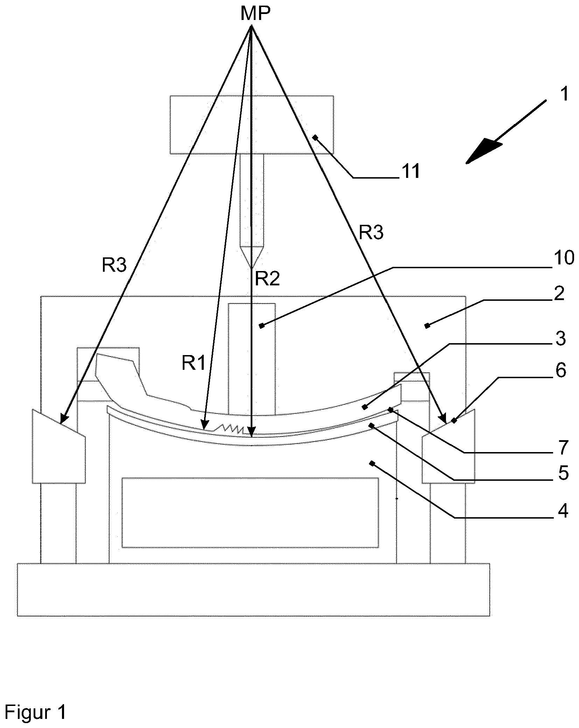

**Figur 1** zeigt den Aufbau der Vorrichtung zur Montage sphärischer Bauteile 1. Eine erste Halterung 2 nimmt ein erstes optisches Element 3 so auf, dass eine sphärische optische Fläche des optischen Elements 3 mit dem Radius R1 frei zugänglich ist. Im Beispiel ist diese optische Fläche konvex. Eine zweite Halterung 4 nimmt ein zweites optisches Element 5 so auf, dass eine sphärische optische Fläche des zweiten optischen Elements 5 mit einem Radius R2 frei zugänglich ist. Im Beispiel ist diese optische Fläche konkav.

Die erste Halterung 2 besitzt am Umfang außerhalb ihres zentrischen Bereichs, in dem das optische Element 3 platziert ist, eine Lagerfläche 6, die konvex mit einem Radius R3 ausgebildet ist. Weiterhin besitzt die zweite Halterung 4 ebenfalls am Umfang außerhalb des zentrischen Bereichs, in dem das optische Element 5 platziert ist, eine Lagerfläche 6, die jedoch konkav ist, ebenfalls mit dem Radius R3.

Die zweite Halterung 4 wird bodenseitig so angeordnet, dass die optische Fläche des zweiten optischen Elements 5 frei nach oben liegt. Die erste Halterung 2 wird mit dem aufgenommenen optischen Element 3 mit seiner frei liegenden optischen Fläche über der frei liegenden optischen Fläche des zweiten optischen Elements 5 positioniert. Die Position der optischen Flächen beider optischer Elemente 3 und 5 wird durch die Lagerflächen 6 der Halterungen 2 und 4 auf einen vorbestimmten Abstand eingestellt, so dass zwischen den optischen Flächen ein definierter Spalt 7 (beispielsweise von 1 µm oder 5 µm oder 20 µm oder 50 µm oder 100 µm) realisiert wird.

Wesentlich ist, dass die Radien R1 und R2 der optischen Flächen der optischen Elemente 3 und 5 sowie der Radius R3 der Lagerflächen 6 der Halterungen 2 und 4 einen gemeinsamen Mittelpunkt MP haben. Werden die Halterungen 2 und 4, wie beschrieben, übereinander gelegt, nehmen die optischen Flächen der optischen Elemente 3 und 5 sowie die Lagerfläche 6 eine koaxiale Lage zueinander ein. Damit ist eine Bewegung der optischen Elemente 3 und 5 in radialer Richtung blockiert und der Abstand zwischen den optischen Flächen ist durch den Spalt 7 festgelegt. Es sind daher nur noch eine Drehbewegung oder ein Verschieben der optischen Elemente 3 und 5 zueinander auf dem Radius R3 der Lagerflächen 6 möglich.

In **Figur 1** ist beispielhaft auch die Möglichkeit gezeigt, mit einem Messsystem 11 die Größe des Spaltes 7, der dem Abstand der optischen Flächen zueinander entspricht, zu bestimmen. Zu diesem Zweck ist im Zentrum der ersten Halterung 2 eine Bohrung 10 vorgesehen, durch die der Abstand der optischen Elemente 3 und 5 voneinander, der auch als Mittendicke bezeichnet wird, mit dem Messsystem 11 bestimmt werden kann. Mit dem Messsystem 11 zur Bestimmung der Mittendicke ist der Füge- und Positionierprozess zweier optische Elemente 3 und 5 überprüfbar, steuerbar und gegebenenfalls regelbar. Ein solcher Fügeprozess ist insbesondere bei der Positionierung einer Folie auf einem Brillenglas einer+ Datenbrille hilfreich. Der Spalt 7 zwischen dem ersten optischen Element 3, im Beispiel dem Brillenglas, und dem zweiten optischen Element 5, im Beispiel der Folie, ist mit einer Genauigkeit von kleiner 5 µm herstellbar.

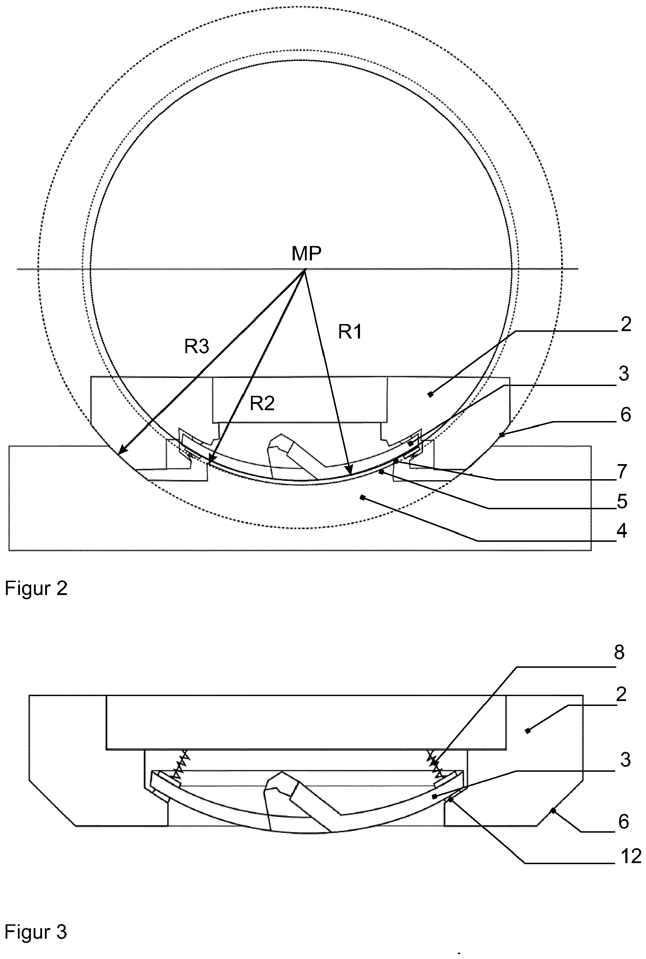

**Figur 2** zeigt den konzentrischen Aufbau der Vorrichtung gemäß Figur 1 in einer deutlicheren Art. Der Radius R1 der optischen Fläche des ersten optischen Elements 3, der Radius R2 der optischen Fläche des zweiten optischen Elements 5 und der Radius R3 der Lagerflächen 6 der ersten und zweiten Halterung 2 und 4 haben den gemeinsamen Mittelpunkt MP. Im Beispiel ist das erste optische Element das Glas einer Datenbrille und das zweite optische Element 5 ist eine dünne Folie, die auf der zweiten Halterung 4 aufliegt. Weiterhin wird in Figur 2 eine andere Art der Halterung des ersten optischen Elements 3 in der ersten Halterung 2 gezeigt.

Die **Figur 3** verdeutlicht die in Figur 2 gezeigte Halterung des ersten optischen Elements 3 in der ersten Halterung 2. Das erste optische Element 3 wird mit einer Federklemmung 8, die auf einen Rand einer konkaven optischen Fläche des ersten optischen Elements 3 einwirkt, gegen Anlagepunkte 12 gedrückt, die auf die konvexe optische Fläche des ersten optischen Elements 3 einwirken. Beispielsweise sind die Anlagepunkte 12 drei V-Nuten, die im Winkel von 120 Grad angeordnet und in denen jeweils einer Kugel fixiert ist. Die Kugeloberflächen bilden die Lagerfläche 6.

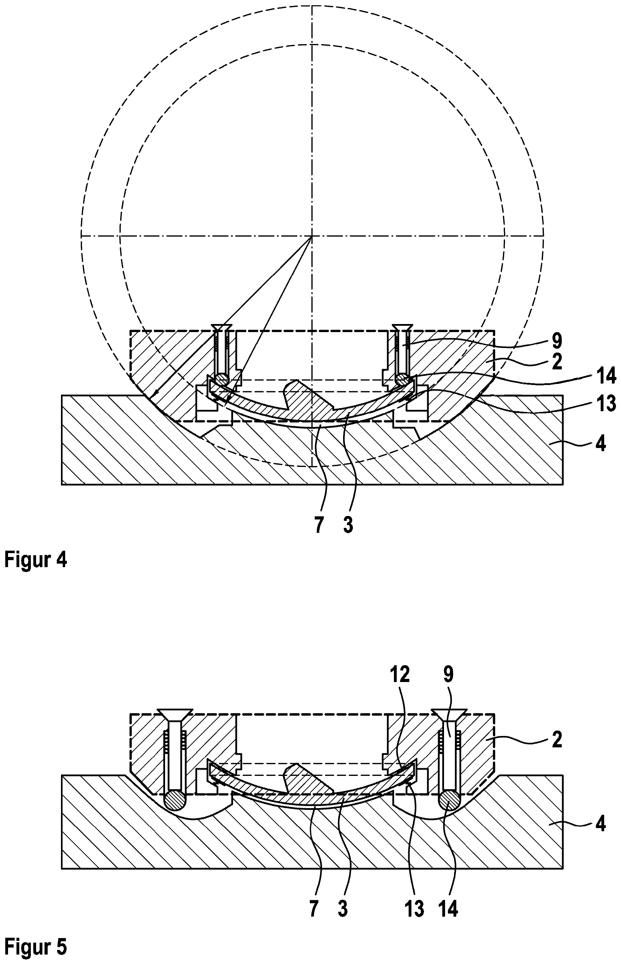

**Figur 4** zeigt die Vorrichtung zur Montage sphärischer Bauteile 1 entsprechend der Figuren 1 und 2 mit einer Justiermöglichkeit für die Größe des Spaltes 7 durch Justierschrauben 9. Die Justierschrauben 9 wirken über Kugeln 14 auf den Rand der konkaven optischen Fläche des ersten optischen Elements 3 ein. Druckfedern 13, die am Rand der konvexen optischen Fläche des ersten optischen Elements 3 angeordnet sind, drücken das erste optische Element 3 gegen die Justierschrauben 9. Durch eine Verstellung der Justierschrauben 9 kann die Größe des Spalts 7 eingestellt werden.

Die **Figur 5** zeigt eine zweite Variante zur Einstellung der Größe des Spalts 7. Die Justierschrauben 9 wirken in diesem Beispiel über Kugeln auf die Lagerfläche 6 der zweiten Halterung 4 ein. Auch hier wird durch eine Verstellung der Justierschrauben 9 die Größe des Spalts 7 eingestellt. In Figur 5 wird weiterhin eine weitere Variante zur Fassung des ersten optischen Elements 3 gezeigt. In diesem Beispiel wird die konkave optische Fläche durch eine Federklemmung 8, die an der konvexen optischen Fläche einwirkt, gegen Anlagepunkte 12 der ersten Fassung 2 gedrückt. In Figur 5 ist gezeigt, dass die Fixierung des ersten optischen Elements mit Druckfedern 13, die am Rand der konvexen optischen Fläche angeordnet sind, erfolgt. Die Druckfedern 13 drücken das erste optische Element 3 gegen Anlagepunkte 13, die am Rand der konkaven optischen Fläche des optischen Elements 3 angeordnet sind.

### Bezugszeichenliste

- 1: Montagevorrichtung
- 2: erste Halterung
- 3: erstes optisches Element
- 4: zweite Halterung
- 5: zweites optisches Element
- 6: Lagerfläche
- 7: Spalt
- 8: Federklemmung
- 9: Justierschrauben
- 10: Bohrung
- 11: Messsystem
- 12: Anlagepunkte
- 13: Druckfeder
- 14: Kugel

- R1: Radius einer konvexen optischen Fläche
- R2: Radius einer konkaven optischen Fläche
- R3: Radius der Lagerflächen
- MP: Mittelpunkt

## Patentansprüche

1. Vorrichtung (1) zur Justage und Montage sphärischer optischer Bauteile, umfassend eine erste Halterung (2) mit einer Aufnahme für ein erstes optisches Element (3) mit einer ersten sphärischen konvexen Fläche mit einem ersten Radius (R1), eine zweite Halterung (4) mit einer Aufnahme für ein zweites optisches Element (5) mit einer zweiten sphärischen konkaven Fläche mit einem zweiten Radius (R2), wobei
- zumindest eine der Halterungen (2, 4) eine sphärische Lagerfläche (6) mit einem dritten Radius (R3) aufweist,
- die erste Halterung (2) auf der zweiten Halterung (4) lagerbar ist, derart, dass die ersten, zweiten und dritten Radien (R1, R2, R3) einen gemeinsamen Mittelpunkt aufweisen, wenn das erste optische Element (3) in die erste Halterung (2) aufgenommen ist, und das zweite optische Element (5) in die zweite Halterung (2) aufgenommen ist,
**dadurch gekennzeichnet, dass**
die Vorrichtung Mittel zur Einstellung des Abstands eines Spaltes (7) zwischen der ersten optischen Fläche des ersten optischen Elements (3) und der zweiten optischen Fläche des zweiten optischen Elements (5) umfasst.

2. Vorrichtung nach Anspruch 1, bei der die erste und zweite Halterung (2, 4) in der Lagerfläche (6) relativ zueinander in konzentrischer Weise bewegbar sind.

3. Vorrichtung nach Anspruch 2, bei der die Lagerfläche (6) die Form einer Kugelkalotte hat.

4. Vorrichtung nach Anspruch 2, bei der die Lagerfläche (6) durch eine Dreipunkt-Auflage hergestellt ist.

5. Vorrichtung nach Anspruch 1, bei der eines der optischen Elemente (3, 5) durch ein Vakuum mit der entsprechenden Halterung (2, 4) fixierbar ist.

6. Vorrichtung nach Anspruch 1, bei der eines der optischen Elemente (3, 5) durch eine Federklemmung (8) mit der entsprechenden Halterung (2, 4) fixierbar ist.

7. Vorrichtung nach Anspruch 1, welche in einer der Halterungen (2, 4) zur Einstellung des Abstands Justierschrauben (9) umfasst,
wobei die Justierschrauben außerhalb eines zentrischen Bereichs der einen Halterung (2, 4), in dem das entsprechende optische Element (3, 5) platzierbar ist, angeordnet sind und auf die Lagerfläche (6) der anderen Halterung (4, 2) einwirken.

8. Vorrichtung nach Anspruch 1, welche in einer der Halterungen (2, 4) zur Einstellung des Abstands Justierschrauben (9) umfasst, wobei die Justierschrauben (9) in der einen Halterung (2, 4) am Umfang innerhalb des zentrischen Bereichs, in denen eines der optischen Elemente (3, 5) platziert ist, angeordnet sind und auf das eine optische Element (3, 5) einwirken.

9. Vorrichtung nach Anspruch 1, weiter aufweisend ein Messsystem (11), wobei das Messsystem (11) zur Bestimmung einer Mittendicke und somit zur Bestimmung des Abstands zwischen den optischen Flächen der optischen Elemente (3, 5) eingerichtet ist.

## Claims

1. Device (1) for adjusting and mounting spherical optical components, comprising a first holder (2) with a mount for a first optical element (3) having a first spherical convex surface with a radius (R1), a second holder (4) with a mount for a second optical element (5) having a second spherical concave surface with a radius (R2), wherein
- at least one of the holders (2, 4) has a spherical bearing surface (6) with a radius (R3),
- the first holder (2) can be borne on the second holder (4) in such a way that the first, second and third radii (R1, R2, R3) have a common centre point when the first optical element (3) has been received in the first holder (2) and the second optical element (5) has been received in the second holder (2),
**characterized in that**
the device comprises means for setting the distance of a gap (7) between the first optical surface of the first optical element (3) and the second optical surface of the second optical element (5).

2. Device according to Claim 1, in which the first and second holders (2, 4) are movable relative to one another in a concentric manner in the bearing surface (6).

3. Device according to Claim 2, in which the bearing surface (6) has the shape of a spherical cap.

4. Device according to Claim 2, in which the bearing surface (6) is produced by a three-point support.

5. Device according to Claim 1, in which one of the optical elements (3, 5) can be fixed to the corresponding holder (2, 4) by a vacuum.

6. Device according to Claim 1, in which one of the optical elements (3, 5) can be fixed to the corresponding holder (2, 4) by a spring clamp (8).

7. Device according to Claim 1, which comprises adjusting screws (9) in one of the holders (2, 4) for setting the distance,
wherein the adjusting screws are arranged outside a central area of the one holder (2, 4) in which the corresponding optical element (3, 5) can be placed and act on the bearing surface (6) of the other holder (4, 2) .

8. Device according to Claim 1, which comprises adjusting screws (9) in one of the holders (2, 4) for setting the distance, wherein the adjusting screws (9) in the one holder (2, 4) are arranged on the periphery inside the central area in which one of the optical elements (3, 5) is placed and act on the one optical element (3, 5).

9. Device according to Claim 1, further comprising a measuring system (11), wherein the measuring system (11) is set up for determining a central thickness and thus for determining the distance between the optical surfaces of the optical elements (3, 5).

## Revendications

1. Dispositif (1) d'alignement et de montage de composants optiques sphériques, comprenant un premier support (2) comportant un logement pour un premier élément optique (3) ayant une première surface convexe sphérique présentant un premier rayon (R1), un deuxième support (4) comportant un logement pour un deuxième élément optique (5) ayant une deuxième surface convexe sphérique présentant un deuxième rayon (R2),
- au moins l'un des supports (2, 4) présentant une surface d'appui sphérique (6) ayant un troisième rayon (R3),
- le premier support (2) pouvant être monté sur le deuxième support (4), de telle sorte que les premier, deuxième et troisième rayons (R1, R2, R3) présentent un centre commun lorsque le premier élément optique (3) est logé dans le premier support (2), et le deuxième élément optique (5) est logé dans le deuxième support (2),
**caractérisé en ce que**
le dispositif comprend des moyens permettant de régler la distance d'un interstice (7) entre la première surface optique du premier élément optique (3) et la deuxième surface optique du deuxième élément optique (5).

2. Dispositif selon la revendication 1, dans lequel le premier et le deuxième support (2, 4) sont déplaçables l'un par rapport à l'autre de manière concentrique dans la surface d'appui (6).

3. Dispositif selon la revendication 2, dans lequel la surface d'appui (6) a la forme d'une calotte sphérique.

4. Dispositif selon la revendication 2, dans lequel la surface d'appui (6) est produite par un support en trois points.

5. Dispositif selon la revendication 1, dans lequel l'un des éléments optiques (3, 5) peut être fixé au support correspondant (2, 4) par un vide.

6. Dispositif selon la revendication 1, dans lequel l'un des éléments optiques (3, 5) peut être fixé au support correspondant (2, 4) par un serrage élastique (8).

7. Dispositif selon la revendication 1, lequel comprend des vis d'ajustement (9) dans l'un des supports (2, 4) pour le réglage de la distance,
les vis d'ajustement étant disposées à l'extérieur d'une région centrale de l'un des supports (2, 4) dans laquelle l'élément optique correspondant (3, 5) peut être placé et agissant sur la surface d'appui (6} de l'autre support (4, 2).

8. Dispositif selon la revendication 1, lequel comprend des vis d'ajustement (9) dans l'un des supports (2, 4) pour le réglage de la distance, les vis d'ajustement (9) dans l'un des supports (2, 4) étant disposées à la périphérie à l'intérieur de la région centrale dans laquelle l'un des éléments optiques (3, 5) est placé et agissant sur l'un des éléments optiques (3, 5).

9. Dispositif selon la revendication 1, présentant en outre un système de mesure (11), le système de mesure (11) étant conçu pour la détermination d'une épaisseur centrale et donc pour la détermination de la distance entre les surfaces optiques des éléments optiques (3, 5).
